# EUROPEAN PATENT APPLICATION

(11) **EP 4 250 696 A1**
(43) Date of publication of application: **27.09.2023**
(21) Application number: 21909196.4
(22) Date of filing: 13.12.2021
(51) Int. Cl.: H04M 1/72412, H04M 1/7243, H04M 1/72454, G04G 21/04

(54) **INFORMATION PROCESSING METHOD, ELECTRONIC DEVICE, AND SYSTEM**

(30) Priority: 21.12.2020 CN 202011534011
(71) Applicant: Huawei Technologies Co., Ltd., Shenzhen, Guangdong 518129 (CN)
(72) Inventor: LIN, Nan, Shenzhen, Guangdong 518129 (CN)
(74) Representative: Maiwald GmbH
(86) International application number: PCT/CN2021/137325
(87) International publication number: WO 2022/135199

(57) **Abstract**

Embodiments of this application provide an information processing method. The method is applied to a system including a first device and a second device, and the first device is connected to the second device. The method includes: The second device receives first information, and sends the first information to the first device, where the first information indicates to perform a target operation. The first device outputs the first information after receiving the first information. The first device receives a first operation. The first device sends a first notification to the second device in response to the first operation. The second device performs the target operation after receiving the first notification. According to the embodiments of this application, the target operation indicated by the first information can be quickly performed. This simplifies manual user operation steps, and improves operation convenience.

## Description

This application claims priority to Chinese Patent Application No. 202011534011.X, filed with the China National Intellectual Property Administration on December 21, 2020 and entitled "INFORMATION PROCESSING METHOD, ELECTRONIC DEVICE, AND SYSTEM", which is incorporated herein by reference in its entirety.

### TECHNICAL FIELD

This application relates to the field of electronic device technologies, and in particular, to an information processing method, an electronic device, and a system.

### BACKGROUND

A wearable electronic device such as a smart band may be connected to a mobile terminal such as a mobile phone in a communication manner such as Bluetooth or wireless fidelity (wireless fidelity, Wi-Fi). After the connection, a user may quickly obtain, by using the wearable electronic device without taking out the mobile terminal, information such as an incoming call, an SMS message, and instant messaging information received by the mobile terminal.

The user may perform a specific operation based on the foregoing information. For example, the smart band may display an SMS message received by the mobile phone: "You navigate to Place A, and I'll wait for you here". The user may perform the following operations based on the SMS message: taking out and opening the mobile phone, starting a navigation application on the mobile phone, entering a destination "Place A" in the navigation application, and performing search, to finally obtain route information. However, this operation process is relatively cumbersome. In addition, the user may alternatively perform the foregoing specific operations based on the wearable electronic device, but the wearable electronic device is usually relatively small. Therefore, a process of performing the specific operations (especially an operation of entering a text) is more difficult. Consequently, a user operation is inconvenient, and experience is relatively poor.

### SUMMARY

Embodiments of this application disclose an information processing method, an electronic device, and a system, so as to quickly perform a target operation indicated by first information. This simplifies manual user operation steps, and improves operation convenience.

According to a first aspect, an embodiment of this application provides an information processing method. The method is applied to a system including a first device and a second device, and the first device is connected to the second device. The method includes: The second device receives first information, and sends the first information to the first device, where the first information indicates to perform a target operation. The first device outputs the first information after receiving the first information. The first device receives a first operation. The first device sends a first notification to the second device in response to the first operation. The second device performs the target operation after receiving the first notification.

In this application, after the first device receives the first operation, the second device may directly perform the target operation indicated by the first information. In other words, after obtaining the first information, a user may directly view an execution result of the target operation by performing the first operation, and the user does not need to manually perform the target operation. This implements an effect of "one-step direct", and improves operation convenience and user experience.

In a possible implementation, the method further includes: After receiving the first information, the second device identifies that the first information indicates to perform the target operation. Before the first device receives the first operation, the method further includes: The second device sends a second notification to the first device. That the first device sends a first notification to the second device in response to the first operation includes: The first device sends the first notification to the second device in response to the received first operation after receiving the second notification.

In this application, even if the first device cannot identify content indicated by the first information, the first device may still work based on a notification of the second device. Therefore, after obtaining the first information, the user directly views the execution result of the target operation by performing the first operation, and the user does not need to manually perform the target operation. In other words, the first device with relatively poor performance may also be used to implement this application, and an application scenario is wider.

In a possible implementation, before the first device receives the first operation, the method further includes: After receiving the first information, the first device identifies that the first information indicates to perform the target operation. The first device sends a third notification to the second device, where the third notification includes indication information of the target operation. The second device sends a fourth notification to the first device after receiving the third notification. That the first device sends a first notification to the second device in response to the first operation includes: The first device sends the first notification to the second device in response to the received first operation after receiving the fourth notification.

In a possible implementation, before the first device receives the first operation, the method further includes: After receiving the first information, the first device identifies that the first information indicates to perform the target operation, where the first notification includes indication information of the target operation.

In this application, the first device may alternatively identify content indicated by the first information. An implementation is relatively flexible, and an application scenario is wider.

In a possible implementation, the second notification or the fourth notification indicates the first device to enable a function of receiving the first operation.

In this application, the second device may indicate the first device to enable the function of receiving the first operation. The first device sends the first notification to the second device only when the first operation is received, so that the second device performs the target operation. This avoids a case in which the second device also performs the target operation due to accidental touch of the user, and improves user experience.

In a possible implementation, that the first device sends a third notification to the second device includes: The first device sends the third notification to the second device when determining that the second device can perform the target operation.

In a possible implementation, that the second device sends a fourth notification to the first device after receiving the third notification includes: After receiving the third notification, the second device determines whether the second device can perform the target operation. The second device sends the fourth notification to the first device when determining that the second device can perform the target operation.

In this application, before the second device performs the target operation, the first device or the second device may first determine whether the second device can perform the target operation. The first device or the second device continues to perform a related operation only when determining that the second device can perform the target operation. This avoids unnecessary power consumption, and improves availability.

In a possible implementation, that the second device performs the target operation after receiving the first notification includes: The second device performs user identity authentication after receiving the first notification. The second device performs the target operation when the user identity authentication succeeds.

In this application, before the second device performs the target operation, the second device may first perform user identity authentication, and the second device performs the target operation only when the authentication succeeds. This improves security and reliability.

In a possible implementation, the first device is a wearable electronic device, and the second device is a mobile terminal device.

In a possible implementation, the target operation includes at least one of the following: starting a first application, displaying a first interface, and enabling or disabling a first function.

In a possible implementation, the first information is instant messaging information or an SMS message.

According to a second aspect, an embodiment of this application provides an information processing system. The system includes a first device and a second device, and the first device is connected to the second device. The second device is configured to: receive first information, and send the first information to the first device, where the first information indicates to perform a target operation. The first device is configured to: output the first information after receiving the first information; receive a first operation; and send a first notification to the second device in response to the first operation. The second device is configured to perform the target operation after receiving the first notification.

In this application, after the first device receives the first operation, the second device may directly perform the target operation indicated by the first information. In other words, after obtaining the first information, a user may directly view an execution result of the target operation by performing the first operation, and the user does not need to manually perform the target operation. This implements an effect of "one-step direct", and improves operation convenience and user experience.

In a possible implementation, the second device is further configured to: after receiving the first information, identify that the first information indicates to perform the target operation. Before the first device receives the first operation, the second device is further configured to send a second notification to the first device. When the first device sends the first notification to the second device in response to the first operation, the first device is specifically configured to send the first notification to the second device in response to the received first operation after receiving the second notification.

In this application, even if the first device cannot identify content indicated by the first information, the first device may still work based on a notification of the second device. Therefore, after obtaining the first information, the user directly views the execution result of the target operation by performing the first operation, and the user does not need to manually perform the target operation. In other words, the first device with relatively poor performance may also be used to implement this application, and an application scenario is wider.

In a possible implementation, before the first device receives the first operation, the first device is further configured to: after receiving the first information, identify that the first information indicates to perform the target operation; and send a third notification to the second device, where the third notification includes indication information of the target operation; and the second device is further configured to send a fourth notification to the first device after receiving the third notification. When the first device sends the first notification to the second device in response to the first operation, the first device is specifically configured to send the first notification to the second device in response to the received first operation after receiving the fourth notification.

In a possible implementation, before the first device receives the first operation, the first device is further configured to: after receiving the first information, identify that the first information indicates to perform the target operation, where the first notification includes indication information of the target operation.

In this application, the first device may alternatively identify content indicated by the first information. An implementation is relatively flexible, and an application scenario is wider.

In a possible implementation, the second notification or the fourth notification indicates the first device to enable a function of receiving the first operation.

In this application, the second device may indicate the first device to enable the function of receiving the first operation. The first device sends the first notification to the second device only when the first operation is received, so that the second device performs the target operation. This avoids a case in which the second device also performs the target operation due to accidental touch of the user, and improves user experience.

In a possible implementation, when the first device sends the third notification to the second device, the first device is specifically configured to send the third notification to the second device when determining that the second device can perform the target operation.

In a possible implementation, when the second device sends the fourth notification to the first device after receiving the third notification, the second device is specifically configured to: after receiving the third notification, determine whether the second device can perform the target operation; and send the fourth notification to the first device when determining that the second device can perform the target operation.

In this application, before the second device performs the target operation, the first device or the second device may first determine whether the second device can perform the target operation. The first device or the second device continues to perform a related operation only when determining that the second device can perform the target operation. This avoids unnecessary power consumption, and improves availability.

In a possible implementation, when the second device performs the target operation after receiving the first notification, the second device is specifically configured to: perform user identity authentication after receiving the first notification; and perform the target operation when the user identity authentication succeeds.

In this application, before the second device performs the target operation, the second device may first perform user identity authentication, and the second device performs the target operation only when the authentication succeeds. This improves security and reliability.

In a possible implementation, the first device is a wearable electronic device, and the second device is a mobile terminal device.

In a possible implementation, the target operation includes at least one of the following: starting a first application, displaying a first interface, and enabling or disabling a first function.

In a possible implementation, the first information is instant messaging information or an SMS message.

According to a third aspect, an embodiment of this application provides an electronic device. The electronic device includes at least one memory and at least one processor. The at least one memory is coupled to the at least one processor. The at least one memory is configured to store a computer program. The at least one processor is configured to invoke the computer program. The computer program includes instructions, and when the instructions are executed by the at least one processor, the electronic device is enabled to perform the information processing method according to any one of the first aspect and the implementations of the first aspect in embodiments of this application.

According to a fourth aspect, an embodiment of this application provides a computer storage medium, including computer instructions. When the computer instructions are run on an electronic device, the electronic device is enabled to perform the information processing method according to any one of the first aspect and the implementations of the first aspect in embodiments of this application.

According to a fifth aspect, an embodiment of this application provides a computer program product. When the computer program product runs on an electronic device, the electronic device is enabled to perform the information processing method according to any one of the first aspect and the implementations of the first aspect in embodiments of this application.

According to a sixth aspect, an embodiment of this application provides a chip. The chip includes at least one processor, an interface circuit, and a memory. The memory, the interface circuit, and the at least one processor are connected through a line. The memory stores a computer program. When the computer program is executed by the at least one processor, the information processing method according to any one of the first aspect and the implementations of the first aspect in embodiments of this application is implemented.

It may be understood that the electronic device according to the third aspect, the computer storage medium according to the fourth aspect, the computer program product according to the fifth aspect, and the chip according to the sixth aspect are all configured to perform the information processing method according to any one of the first aspect and the implementations of the first aspect. Therefore, for beneficial effects that can be achieved, refer to the beneficial effects in the information processing method according to the first aspect. Details are not described again.

### BRIEF DESCRIPTION OF DRAWINGS

The following describes the accompanying drawings used in embodiments of this application.
FIG. 1 is a schematic diagram of an architecture of an information processing system according to an embodiment of this application;
FIG. 2 is a schematic diagram of a hardware structure of an electronic device according to an embodiment of this application;
FIG. 3 is a schematic diagram of a software architecture of an electronic device according to an embodiment of this application;
FIG. 4-1 to FIG. 6-2 are some schematic diagrams of human-computer interaction according to embodiments of this application; and
FIG. 7 to FIG. 16 are schematic flowcharts of some information processing methods according to embodiments of this application.

### DESCRIPTION OF EMBODIMENTS

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should be further understood that a term "and/or" used in this application indicates and includes any one or all of possible combinations of one or more listed items.

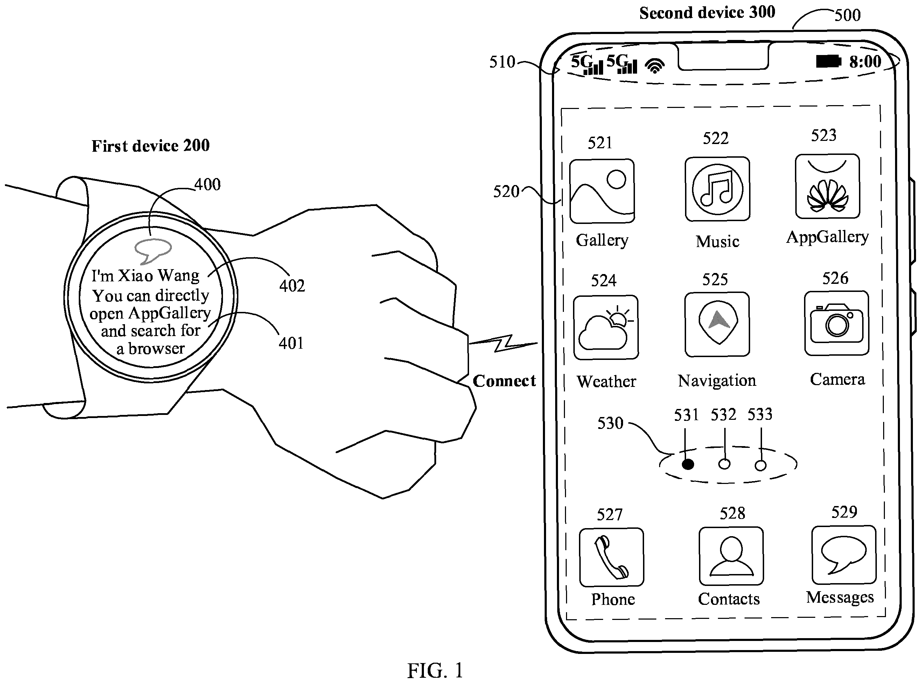

FIG. 1 is a schematic diagram of an architecture of an information processing system according to an embodiment of this application. The information processing system may include a first device 200 and a second device 300. The first device 200 and the second device 300 may be directly connected and communicate in a wired or wireless manner. This is not limited thereto. The first device 200 and the second device 300 may also be connected to the internet in a wired or wireless manner, and communicate with each other through the internet. The wired manner includes, for example, a universal serial bus (universal serial bus, USB), a twisted pair, a coaxial cable, and an optical fiber. The wireless manner includes, for example, wireless fidelity (wireless fidelity, Wi-Fi), Bluetooth, and cellular communication. The internet includes, for example, at least one server. The server may be a hardware server, or may be a cloud server.

As shown in FIG. 1, the first device 200 may display a user interface 400. The user interface 400 may include a text 401 and information 402. The text 401 is a nickname of a user who sends the information 402. The information 402 may be instant messaging information or an SMS message received by the first device 200 from the internet or another device, or may be instant messaging information or an SMS message received by the second device 300 from the internet or another device and then forwarded to the first device 200. The information 402 is a text: "You can directly open AppGallery and search for a browser".

As shown in FIG. 1, the second device 300 may display a user interface 500. The user interface 500 may include a status bar 510, an application icon 520, and a page switching option 530.

The status bar 510 may include a name of a connected mobile network, a Wi-Fi icon, signal strength, and a current remaining battery level. The connected mobile network is a fifth generation mobile communications technology (5th generation mobile communications technology, 5G) network with four signal bars (that is, best signal strength).

The application icon 520 may include, for example, an icon 521 of Gallery, an icon 522 of Music, an icon 523 of AppGallery, an icon 524 of Weather, an icon 525 of Navigation, an icon 526 of Camera, an icon 527 of Phone, an icon 528 of Contacts, and an icon 529 of Messages, and may further include an icon of another application. This is not limited in this embodiment of this application. Any application icon may be used to respond to an operation of a user, for example, a touch operation, so that the second device 300 starts an application corresponding to the icon.

The page switching option 530 may include a first page option 531, a second page option 532, and a third page option 533. If the first page option 531 on the user interface 500 is in a selected state, it indicates that the user interface 500 is a first interface of a desktop displayed by the second device 300. The second device 300 may receive a slide operation (for example, an operation of sliding from right to left) performed by the user on a blank area or the page switching option 530 on the user interface 500. In response to the slide operation, the second device 300 may switch a display interface to a second interface or a third interface of the desktop. When the second device 300 displays the second interface of the desktop, the second page option 532 is in a selected state. When the second device 300 displays the third interface of the desktop, the third page option 533 is in a selected state.

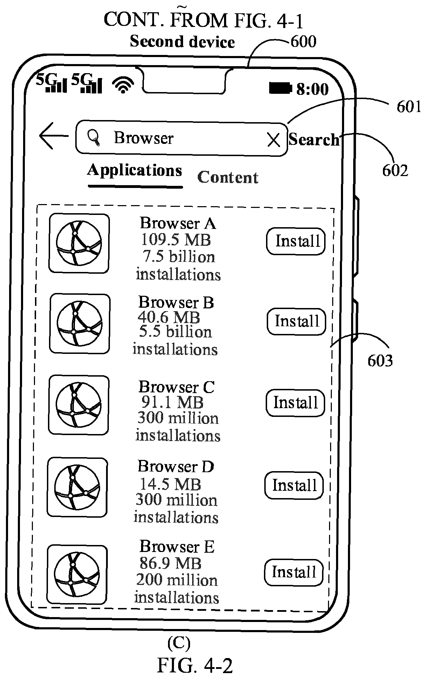

The user may view the information 402 by using the first device 200, and then perform the following operations on the second device 300 based on the information 402: tapping the icon 523 of AppGallery on the user interface 500 to start AppGallery, tapping a search bar on a user interface of AppGallery (for example, a search bar 601 on a user interface 600 shown in (C) in FIG. 4-2), entering "Browser" in the search bar, and triggering search (for example, tapping a control 602 on the user interface 600 shown in (C) in FIG. 4-2), to finally obtain a corresponding search result (for example, a list 603 on the user interface 600 shown in (C) in FIG. 4-2). However, the operations are relatively cumbersome and inconvenient for the user.

This application provides an information processing method, and the method may be applied to the information processing system shown in FIG. 1. First information displayed by the first device 200 may be identified as being used to indicate to perform a target operation. The first device 200 may receive a first operation (for example, a double-tap operation, a touch and hold operation, or a touch operation performed on a specific control). In response to the first operation, the first device 200 or the second device 300 may perform the target operation. The target operation includes, for example, starting a first application, displaying a first interface, and enabling or disabling a first function. In this application, the target operation may be directly performed when the first operation is received. This simplifies manual user operation steps, and improves operation convenience and user experience.

An electronic device in this application may be a device such as a Huawei Vision, a smart television, a mobile phone, a tablet computer, a desktop, a laptop, a notebook computer, an ultra-mobile personal computer (Ultra-mobile Personal Computer, UMPC), a handheld computer, a netbook, a personal digital assistant (Personal Digital Assistant, PDA), or a wearable electronic device (such as a smart band or smart glasses). The first device 200 and the second device 300 each may be any one of the devices listed above. The first device 200 and the second device 300 may be the same or may be different. For example, the first device 200 is a smartwatch, and the second device 300 is a mobile phone.

The following describes an example electronic device provided in embodiments of this application.

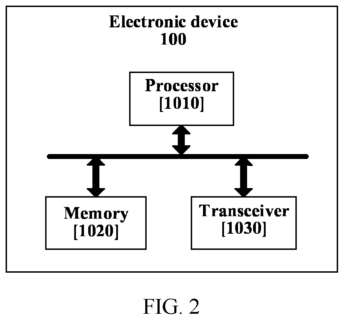

FIG. 2 is a schematic diagram of an example of a structure of an electronic device 100. The electronic device 100 may be the first device 200 or the second device 300 in the information processing system shown in FIG. 1. The electronic device 100 may include a processor 1010, a memory 1020, and a transceiver 1030. The processor 1010, the memory 1020, and the transceiver 1030 are connected to each other through a bus.

The processor 1010 may be one or more central processing units (central processing unit, CPU). When the processor 1010 is one CPU, the CPU may be a single-core CPU, or may be a multi-core CPU. The memory 1020 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1020 is configured to store a related computer program and data.

The transceiver 1030 is configured to receive and send data. In some embodiments, the transceiver 1030 may provide a solution, applied to the electronic device 100, to wireless communication including 2G, 3G, 4G, 5G, or the like. In some embodiments, the transceiver 1030 may provide a solution, applied to the electronic device 100, to wireless communication including a wireless local area network (wireless local area network, WLAN), such as a wireless fidelity (wireless fidelity, Wi-Fi) network, Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. By using the transceiver 1030, the electronic device 100 may communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

For example, the electronic device 100 is the second device, and the first device is a wearable device. By using the transceiver 1030, the second device may collect a connection status of the first device, that is, a status indicating whether the first device is connected to the second device. When the first device is connected to the second device, the second device may further receive, by using the transceiver 1030, biometric feature information (for example, pulse information or heart rate information) of a user that is sent by the first device. The processor 1010 may determine, based on the biometric feature information, whether the user wears the first device. It is assumed that the first device is identified by the second device as a trusted device (for example, a wearable device that has been connected or a device that succeeds in password verification). In this case, when the second device determines that the first device has been connected and/or the user has worn the first device, the second device may determine that user identity authentication succeeds.

In some embodiments, the electronic device 100 may further include a speaker, also referred to as a "horn", configured to convert an audio electrical signal into a sound signal. The electronic device 100 may play music or play the first information by using the speaker.

In some embodiments, the electronic device 100 may further include a headset jack, and the headset jack is configured to connect to a wired headset. The headset jack may be a USB interface, or may be a 3.5 mm open mobile terminal platform (open mobile terminal platform, OMTP) standard interface, or a cellular telecommunications industry association of the USA (cellular telecommunications industry association of the USA, CTIA) standard interface. In some embodiments, the electronic device 100 may be connected to a wireless headset, for example, a Bluetooth headset, by using the transceiver 1030. The electronic device 100 may play music or play the first information by using the wired headset or the wireless headset.

In some embodiments, the electronic device 100 may further include a display. The display is configured to display an image, a video, a text, and the like. The display includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-oLED, a quantum dot light emitting diode (quantum dot light emitting diode, QLED), or the like. Optionally, the electronic device 100 may include one or N displays, where N is a positive integer greater than 1.

In some embodiments, the electronic device 100 may further include one or more sensors, for example but is not limited to, a touch sensor, a pressure sensor, a pulse sensor, and a heart rate sensor.

The pressure sensor is configured to sense a pressure signal, and can convert the pressure signal into an electrical signal. There are many types of pressure sensors, for example, a resistive pressure sensor, an inductive pressure sensor, and a capacitive pressure sensor. Optionally, the pressure sensor may be disposed in the display. The touch sensor is also referred to as a "touch component". Optionally, the touch sensor may be disposed in the display. The touch sensor and the display form a touchscreen, which is also referred to as a "touch screen". When a touch operation is performed on the display, the electronic device 100 may detect strength, a location, and the like of the touch operation by using the pressure sensor and/or the touch sensor, and transfer the detected touch operation to the processor 1010, to determine a touch event type. Optionally, the electronic device 100 may further provide a visual output related to the touch operation by using the display. This is not limited thereto. The pressure sensor and/or the touch sensor may alternatively be disposed on a surface of the electronic device 100 at a location different from that of the display. The electronic device 100 may collect screen touch behavior information (for example, a location and an area of a touch area, an occurrence timestamp, a quantity of touch times, and a pressure value) of the user by using the pressure sensor and/or the touch sensor.

The pulse sensor may detect a pulse signal. In some embodiments, the pulse sensor may detect a pressure change generated during artery pulsation, and convert the pressure change into an electrical signal. There are many types of pulse sensors, for example, a piezoelectric pulse sensor, a piezoresistive pulse sensor, and a photoelectric pulse sensor. The piezoelectric pulse sensor and the piezoresistive pulse sensor each may convert, by using a micro-pressure-type material (such as a piezoelectric sheet or a bridge), a pressure process of pulse beating into a signal for output. The photoelectric pulse sensor may convert, in a manner of reflection, transmission, or the like, a change of a transmittance of a blood vessel in a pulse beating process into a signal for output, that is, obtain a pulse signal by using a photoplethysmogram (photoplethysmogram, PPG) method. The electronic device 100 may collect the pulse information of the user by using the pulse sensor.

The heart rate sensor may detect a heart rate signal. In some embodiments, the heart rate sensor may obtain a heart rate signal by using a photoplethysmogram (photoplethysmogram, PPG) method. The heart rate sensor may convert, in a manner of reflection, transmission, or the like, a change of vascular dynamics such as a change of a blood pulse rate (heart rate) or a blood volume (cardiac output) into a signal for output. In some embodiments, the heart rate sensor may measure, by using an electrode connected to human skin, a signal that triggers an electrical activity in the heart tissue, that is, obtain a heart rate signal by using an electrocardiograph (electrocardiography, ECG) method. The electronic device 100 may collect the heart rate information of the user by using the heart rate sensor.

In some embodiments, the electronic device 100 may include one or N cameras, where N is a positive integer greater than 1. The camera is configured to capture a static image or a video. Optionally, the N cameras may be front-facing cameras, rear-facing cameras, lifting cameras, detachable cameras, or the like. A manner of connecting the N cameras to the electronic device 100 and a mechanical mechanism are not limited in this embodiment of this application. In this application, the electronic device 100 may obtain facial information of the user by using the camera, and implement functions such as face unlocking and application lock access based on the facial information.

For example, the electronic device 100 is the first device. The electronic device 100 may display first information by using the display. The electronic device 100 may detect a first operation (for example, a double-tap operation, a touch and hold operation, or a touch operation performed on a specific control) by using the pressure sensor and/or the touch sensor. In response to the first operation, the processor 1010 may perform a target operation. The first information may be identified as being used to indicate to perform the target operation. The target operation is, for example, starting a first application, displaying a first interface, or enabling or disabling a first function. Alternatively, in response to the first operation, the electronic device 100 may send a notification to the second device by using the transceiver 1030, so that the second device performs the target operation.

In some embodiments, the electronic device 100 is configured to perform the target operation. The target operation can be performed only when user identity authentication succeeds. In this case, when the electronic device 100 detects the first operation, the electronic device 100 may first collect biometric feature information of the user in response to the first operation. For example, the electronic device 100 collects a connection status and/or a wearing status of a wearable device by using the transceiver 1030, collects screen touch behavior information of the user by using the pressure sensor and/or the touch sensor, collects pulse information of the user by using the pulse sensor, collects heart rate information of the user by using the heart rate sensor, and collects facial information of the user by using the camera. Then, the processor 1010 performs user identity authentication based on the collected biometric feature information. When the authentication succeeds, the processor 1010 performs the target operation. When the authentication fails, the processor 1010 temporarily does not perform the target operation, and performs the target operation until the authentication succeeds.

In some embodiments, the electronic device 100 may include a SIM card interface, and the SIM card interface is configured to connect to a SIM card. The SIM card may be inserted into the SIM card interface or detached from the SIM card interface, to implement contact with and separation from the electronic device 100. The electronic device 100 may support one or N SIM card interfaces, where N is a positive integer greater than 1. The SIM card interface may support a nano-SIM card, a micro-SIM card, a SIM card, and the like. A plurality of cards may be simultaneously inserted into a same SIM card interface. Types of the plurality of cards may be the same or may be different. The SIM card interface is also compatible with different types of SIM cards. The SIM card interface is also compatible with an external storage card. The electronic device 100 interacts with a network through the SIM card, to implement functions such as a call and data communication. In some embodiments, the electronic device 100 uses eSIM, that is, an embedded SIM card. The eSIM card may be embedded into the electronic device 100, and cannot be separated from the electronic device 100.

In some embodiments, the electronic device 100 is the first device. Optionally, the electronic device 100 may communicate with a connected second device only by using the transceiver 1030. For example, the electronic device 100 is a wearable device that is not connected to a SIM card or the internet. Optionally, in addition to the connected second device, the electronic device 100 may further communicate with the internet and another device by using the transceiver. For example, the electronic device 100 is a wearable device or a terminal that has connected to a SIM card or has connected to the internet.

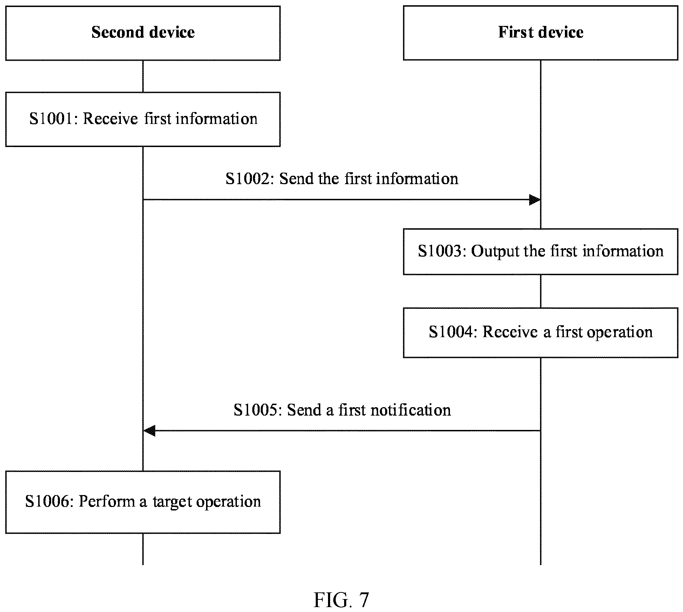

The processor 1010 in the electronic device 100 may be configured to read the computer program and the data that are stored in the memory 1020, to perform information processing methods shown in FIG. 7 to FIG. 15.

A software system of the electronic device 100 may use a layered architecture, an event-driven architecture, a microkernel architecture, a micro service architecture, or a cloud architecture. In an embodiment of this application, an Android system of a layered architecture is used as an example to describe a software structure of the electronic device 100.

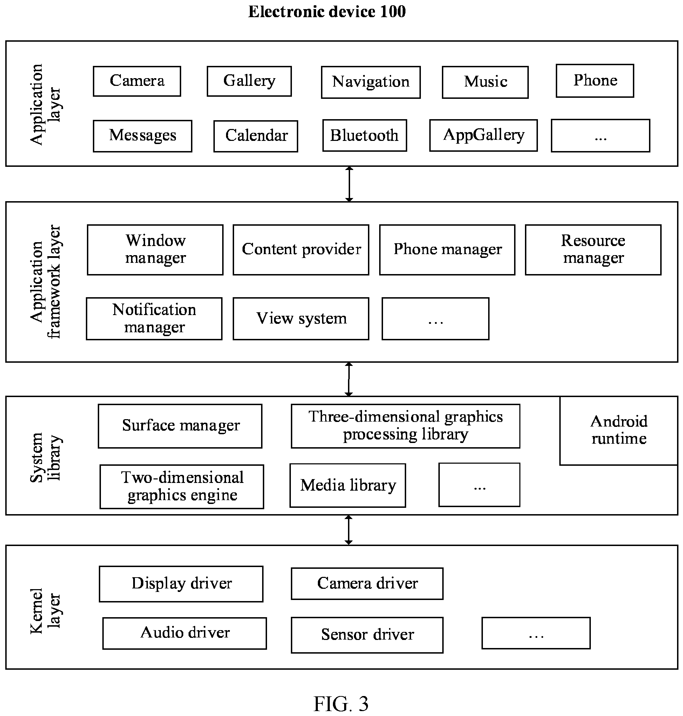

FIG. 3 is a block diagram of the software structure of the electronic device 100 according to an embodiment of the present invention.

In the layered architecture, software is divided into several layers, and each layer has a clear role and task. The layers communicate with each other through a software interface. In some embodiments, the Android^{®} system is divided into four layers: an application layer, an application framework layer, an Android runtime (Android runtime) and system library, and a kernel layer from top to bottom. In this application, the software framework shown in FIG. 3 is merely an example. The system of the electronic device 100 may alternatively be another operating system, such as IOS^{®}, Windows^{®}, or Huawei Mobile Services (Huawei Mobile Services, HMS).

The application layer may include a series of application packages.

As shown in FIG. 3, the application packages may include applications such as Camera, Gallery, Navigation, Music, Phone, Messages, Calendar, Bluetooth, and AppGallery.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a view for displaying a text and a view for displaying an image.

The phone manager is configured to provide a communication function for the electronic device 100, for example, management of a call status (including answering or declining).

The resource manager provides various resources such as a localized character string, an icon, an image, a layout file, and a video file for an application.

The notification manager enables an application to display notification information in a status bar, and may be configured to convey notification type information. The displayed notification information may automatically disappear after a short pause without requiring user interaction. For example, the notification manager is configured to notify download completion, give an information notification, and the like. The notification manager may alternatively be a notification that appears in a top status bar of the system in a form of a graph or a scroll bar text, for example, a notification of an application running on the background, or may be a notification that appears on a screen in a form of a dialog window. For example, text information is prompted in the status bar, an alert sound is played, the electronic device vibrates, or an indicator light blinks.

The Android runtime includes a kernel library and a virtual machine. The Android runtime is responsible for scheduling and management of the Android system.

The kernel library includes two parts: a function that needs to be invoked in Java language, and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver. The display driver may be configured to drive a display in the control hardware, for example, the display shown in FIG. 2. The camera driver may be configured to drive a camera in the control hardware, for example, the camera shown in FIG. 2. The sensor driver may be configured to drive a plurality of sensors in the control hardware, for example, the sensors such as the pressure sensor and the touch sensor shown in FIG. 2.

The following describes an example of a working procedure of the software and the hardware of the electronic device 100 with reference to a scenario of viewing information through touching.

When the touch sensor receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a tap operation, and a control corresponding to the single-tap operation is a prompt box of an SMS message. "Messages" invokes an interface of the application framework layer, then invokes the kernel layer to control the display driver, and displays detailed information corresponding to the prompt box by using the display. In this application, the hardware and software architectures shown in FIG. 2 and FIG. 3 are applicable to the first device, and are also applicable to the second device.

The following describes an application scenario in embodiments of this application and a schematic diagram of human-computer interaction in the scenario. An example in which the first device is a smartwatch and the second device is a smartphone is used for description.

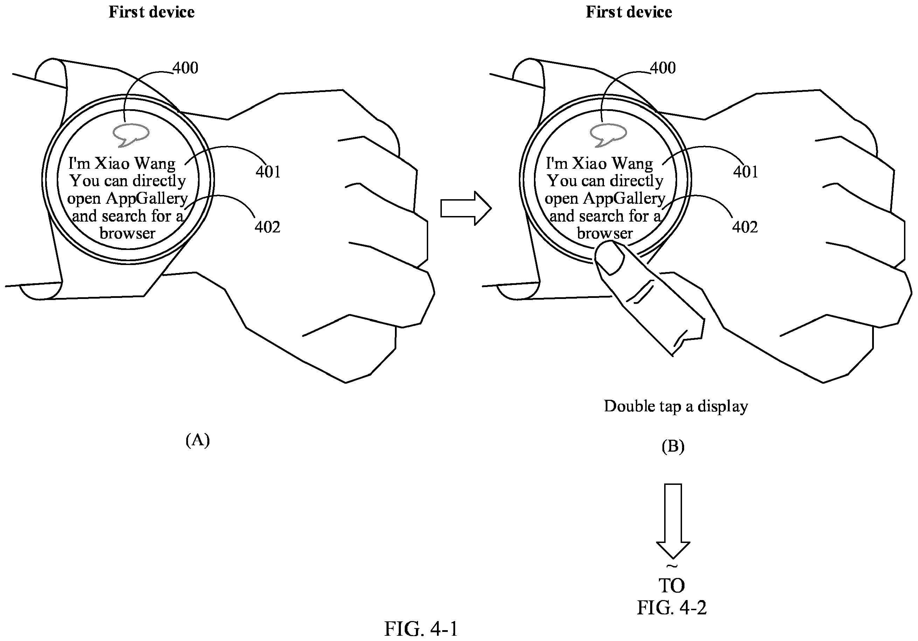

FIG. 4-1 and FIG. 4-2 are a schematic diagram of an example of human-computer interaction.

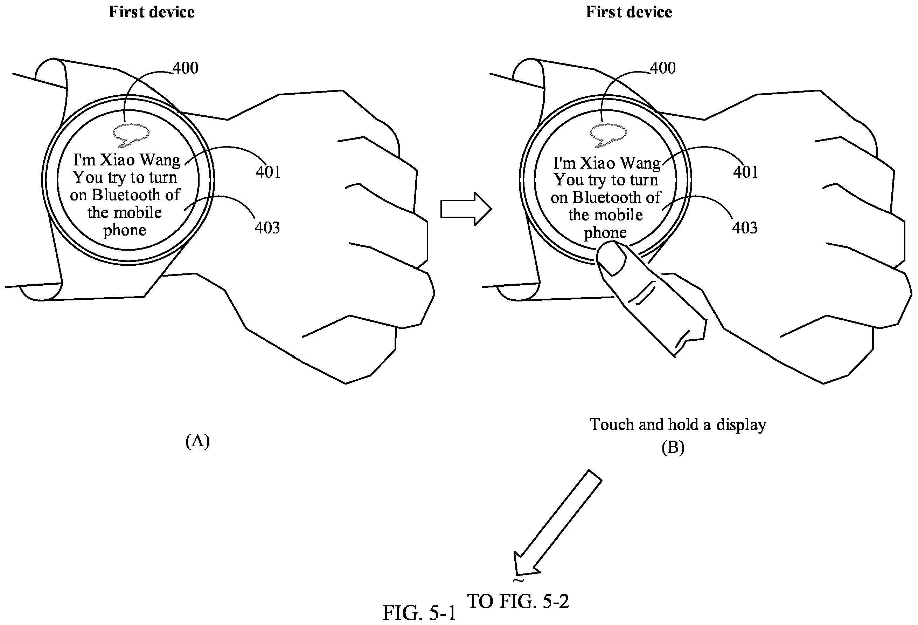

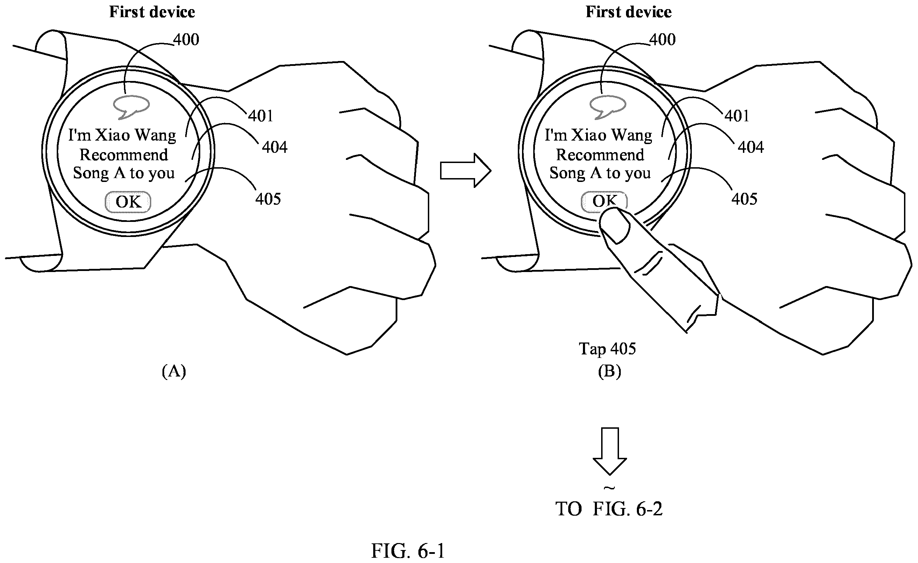

As shown in (A) in FIG. 4-1, the first device displays a user interface 400. The user interface 400 may include a text 401 and information 402. The text 401 is a nickname of a user who sends the information 402. The information 402 may be received by the second device and then forwarded to the first device for display. The information 402 is a text: "You can directly open AppGallery and search for a browser". The second device may perform semantic parsing on the information 402, to identify that the information 402 indicates to perform a target operation, and obtain a semantic parsing result (that is, target operation information represented by the information 402). The semantic parsing result may include an identifier of an application that needs to be started, an identifier of a user interface that is of an application and that needs to be displayed, a parameter that needs to be entered, and the like. Then, the second device may send first indication information to the first device. The first indication information indicates the first device to send second indication information to the second device when the first device receives a first operation. The first operation is, for example but is not limited to, a double-tap operation performed on a display of the first device, a touch and hold operation shown in FIG. 5-1, and a tap operation performed on a specific control shown in FIG. 6-1.

As shown in (B) in FIG. 4-1, after receiving the first indication information sent by the second device, the first device detects a double-tap operation performed on the display, and the first device may send the second indication information to the second device in response to the double-tap operation. The second indication information indicates that the first device has received the first operation.

As shown in (C) in FIG. 4-2, in response to the second indication information, the second device performs the target operation based on the semantic parsing result, and displays a user interface 600. The target operation information represented by the information 402 may specifically include: an identifier of AppGallery, an identifier of a search page of AppGallery, and a parameter "Browser" that needs to be entered. In this case, the target operation performed by the second device includes: starting an application whose identifier is the identifier of AppGallery, displaying the user interface 600 whose identifier is the identifier of the search page, entering, in a search bar 601 on the user interface 600, the parameter "Browser" that needs to be entered, and performing search, to finally obtain a search result: a list 603. When manually performing "search", a user may tap a control 602 on the user interface 600.

In some embodiments, the information 402 may alternatively be instant messaging information or an SMS message received by the first device from the internet or another device. In this case, after receiving the information 402, the first device may forward the information 402 to the second device, so that the second device performs semantic parsing on the information 402.

In some embodiments, the first device may alternatively perform semantic parsing on the information 402. After the first device obtains a semantic parsing result, the first device may directly send the semantic parsing result to the second device, and then the second device sends the first indication information to the first device based on the semantic parsing result. Alternatively, after the first device obtains the semantic parsing result, if the first operation is detected, the first device may send third indication information to the second device. The third indication information includes the semantic parsing result, and indicates the second device to perform the target operation. Optionally, if a capability of receiving the first operation by the first device is in a disabled state, after obtaining the semantic parsing result, the first device may first enable the capability of receiving the first operation.

In some embodiments, if the capability of receiving the first operation by the first device is in a disabled state by default, the first indication information further indicates the first device to enable the capability of receiving the first operation. Optionally, the first indication information further indicates a specific type of the first operation. For example, the first information indicates the first device to enable a capability of receiving a double-tap operation.

In some embodiments, before performing the target operation (for example, before sending the first indication information), the second device may first determine, based on the semantic parsing result, whether the second device can perform the target operation. For example, the second device determines, based on the identifier of AppGallery, whether AppGallery is installed; and if AppGallery is installed, determines that the second device can perform the target operation; or if AppGallery is not installed, determines that the second device cannot perform the target operation.

In some embodiments, if the first device obtains a list of applications installed on the second device, a list of executable functions, and the like, before sending the third indication information to the second device, the first device may first determine, based on the semantic parsing result, whether the second device can perform the target operation. When determining that the second device can perform the target operation, the first device sends the third indication information to the second device.

In some embodiments, it is assumed that the second device can perform the target operation only when user identity authentication succeeds. For example, the second device is in a screen-locked state before performing the target operation. In this case, when receiving the second indication information, the second device may obtain biometric feature information of the user voluntarily or by using the first device, and then perform user identity authentication based on the biometric feature information. For example, the second device collects facial information of the user by using a camera of the first device, and performs identity authentication on the facial information. If the user identity authentication succeeds, the second device may perform the target operation; otherwise, the second device may not perform the target operation or may perform the target operation until the user identity authentication succeeds.

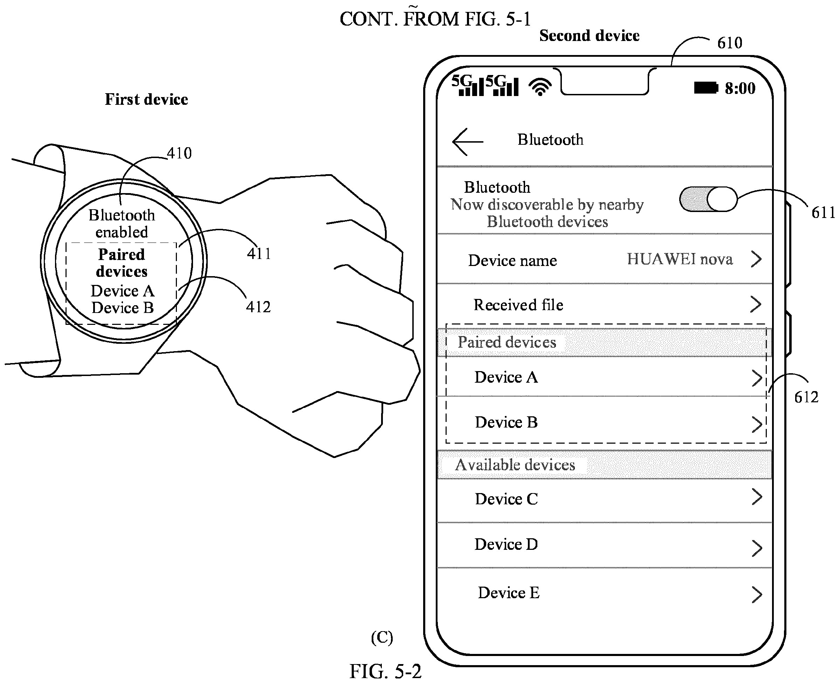

In some embodiments, after performing the target operation, the second device may send second information to the first device for display. The second information may include an execution status of the target operation, for example, a status indicating whether the target operation is successfully performed, and result information (the list 603 shown in (C) in FIG. 4-2) obtained after the target operation is performed. In other words, the user does not need to manually perform the target operation, but can quickly obtain the execution status of the target operation by using the first device. This greatly facilitates use of the user. A specific example is shown in FIG. 5-1 and FIG. 5-2.

FIG. 5-1 and FIG. 5-2 are a schematic diagram of another example of human-computer interaction. FIG. 5-1 and FIG. 5-2 are described by using an example in which the second device performs semantic parsing and performs a target operation.

As shown in (A) in FIG. 5-1, the first device displays a user interface 400. The user interface 400 may include a text 401 and information 403. The text 401 is a nickname of a user who sends the information 403. The information 403 may be received by the second device and then forwarded to the first device for display. The information 403 is a text: "You try to turn on Bluetooth of the mobile phone". The second device may perform semantic parsing on the information 403, to identify that the information 403 indicates to perform the target operation, and obtain target operation information represented by the information 403: an identifier of a Bluetooth application. Then, the second device may send first indication information to the first device.

As shown in (B) in FIG. 5-1, after receiving the first indication information sent by the second device, the first device detects a touch and hold operation performed on the display, and the first device may send second indication information to the second device in response to the touch and hold operation.

As shown in (C) in FIG. 5-2, in response to the second indication information, the second device performs the target operation based on a semantic parsing result: starting an application whose identifier is the identifier of the Bluetooth application, and enabling a Bluetooth function. If the user manually enables the Bluetooth function, the user may tap a control 611 on a user interface 610. After the Bluetooth function of the second device is enabled, the second device may automatically connect to another device, for example, a device that has been connected before, through Bluetooth. A device list 612 on the user interface 610 is used to display a name of a device connected to the second device through Bluetooth. After performing the target operation, the second device may send second information to the first device. The second information indicates that the Bluetooth function is enabled. Optionally, the second information may further include the name of the device connected to the second device through Bluetooth. The first device may display a user interface 410 based on the second information. The user interface 410 includes prompt information 411 and a device list 412. The prompt information 411 indicates that the Bluetooth function is enabled. The device list 412 includes a name of a device connected to the second device through Bluetooth (that is, a device name included in the device list 612 on the user interface 610).

In some embodiments, after performing the target operation, the second device may not display the user interface 610, but directly send the second information to the first device, so that the user interface 410 displayed by the first device provides the user with an execution status of the target operation.

Therefore, the user is unaware of a process of performing the target operation. After performing a first operation (including the foregoing touch and hold operation performed on the display), the user may directly view an execution result of the target operation through the user interface of the first device, and does not need to start the second device.

The case shown in FIG. 5-1 and FIG. 5-2 may also be applied to a shopping scenario. For example, the information displayed by the first device is: "Help me buy a toy in a shopping application". The second device may perform the target operation: opening a shopping application, searching a user interface of the shopping application for a name of an item (that is, a toy) that needs to be purchased, and selecting a search result according to a preset rule for purchase, to finally obtain a purchase result. Then, the second device may send information about the purchase result to the first device as the second information, so that the first device displays the information about the purchase result. Optionally, when performing purchase, the second device needs to perform user identity authentication, and can perform purchase only when the authentication succeeds. Biometric feature information used for user identity authentication, for example, facial information, heart rate information, or pulse information, may be obtained by the second device by using the first device or a camera, a sensor, a transceiver, or the like of the second device. The user does not need to manually perform identity authentication, which is more convenient and fast.

The case shown in FIG. 5-1 and FIG. 5-2 may also be applied to a navigation scenario. For example, the information displayed by the first device is: "You navigate to Place A, and I'll wait for you here". The second device may perform the target operation: opening a navigation application, and searching a user interface of the navigation application for a destination name "Place A", to finally obtain at least one piece of route information. Then, the second device may send the at least one piece of route information to the first device as the second information, so that the first device displays any one or more pieces of route information, so that the user can quickly perform navigation.

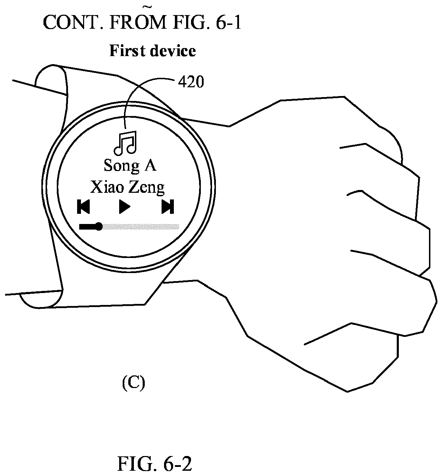

In some embodiments, the first device may alternatively perform the target operation. A specific example is shown in FIG. 6-1 and FIG. 6-2.

FIG. 6-1 and FIG. 6-2 are a schematic diagram of another example of human-computer interaction.

As shown in (A) in FIG. 6-1, the first device displays a user interface 400. The user interface 400 may include a text 401, information 404, and a control 405. The text 401 is a nickname of a user who sends the information 404. The information 404 may be instant messaging information or an SMS message received by the second device and then forwarded to the first device. The information 404 is a text: "Recommend Song A to you". The first device may perform semantic parsing on the information 404, to identify that the information 404 indicates to perform the target operation, and obtain target operation information represented by the information 404: an identifier of a music application and a song name (that is, Song A).

As shown in (B) in FIG. 6-1, the first device may detect a touch operation (for example, a tap operation) performed on a control 405. In response to the touch operation, the first device may perform the target operation based on the target operation information represented by the information 404: starting an application whose identifier is the identifier of the music application, searching for a song whose name is Song A, and playing the song. In this case, the first device may display a user interface 420 shown in (C) in FIG. 6-2. The user interface 420 indicates that the first device is playing Song A by using the music application. Therefore, the user may obtain, through the user interface 420, an execution status of the target operation, that is, a status indicating that the target operation is successfully performed.

In some embodiments, the second device may alternatively perform semantic parsing on the information 404. After obtaining a semantic parsing result, the second device may directly send the semantic parsing result to the first device. Then, when detecting a first operation (including the touch operation performed on the control 405), the first device performs the target operation based on the semantic parsing result. Optionally, the information 404 may alternatively be received by the first device from the internet or another device. After receiving the information 404, the first device may forward the information 404 to the second device, so that the second device performs semantic parsing on the information 404.

In some embodiments, if a capability of receiving the first operation by the first device is in a disabled state by default, before obtaining the semantic parsing result, the first device may first enable the capability of receiving the first operation, to subsequently receive the first operation.

In some embodiments, if the second device is configured to perform semantic parsing on the information 404, and a capability of receiving the first operation by the first device is in a disabled state by default, after receiving the semantic parsing result sent by the second device, the first device may first enable the capability of receiving the first operation, to subsequently receive the first operation.

In some embodiments, before performing the target operation, the first device may first determine, based on the semantic parsing result, whether the first device can perform the target operation. For example, the first device determines, based on the identifier of the music application, whether the music application is installed; and if the music application is installed, determines that the first device can perform the target operation; or if the music application is not installed, determines that the first device cannot perform the target operation.

In some embodiments, if the second device is configured to perform semantic parsing on the information 404, and the second device obtains a list of applications installed on the first device, a list of executable functions, and the like, before sending the semantic parsing result to the first device, the second device may first determine, based on the semantic parsing result, whether the first device can perform the target operation. When determining that the first device can perform the target operation, the second device sends the semantic parsing result to the first device.

In some embodiments, the first device can perform the target operation only when user identity authentication succeeds. In this case, when detecting the first operation, the first device may obtain biometric feature information of the user voluntarily or by using the second device, and then perform user identity authentication based on the biometric feature information. For example, the first device collects pulse information of the user by using a pulse sensor of the first device, and performs identity authentication on the pulse information. If the user identity authentication succeeds, the first device may perform the target operation; otherwise, the first device may not perform the target operation or may perform the target operation until the user identity authentication succeeds.

An information processing method provided in this application is described below in different application scenarios. The method may be implemented based on the information processing system shown in FIG. 1.

FIG. 7 is a schematic flowchart of an example of an information processing method. FIG. 7 is described by using an example in which a second device is configured to receive first information and perform a target operation. The method includes but is not limited to the following steps.

S1001: The second device receives the first information.

S1002: The second device sends the first information to a first device.

S1003: The first device outputs the first information after receiving the first information.

Specifically, the second device may receive the first information from the internet or another device, and then forward the first information to the first device for display. The first information is, for example but is not limited to, instant messaging information or an SMS message. The first information includes, for example but is not limited to, a text, a picture, positioning information, and a file. For an example of the first information, refer to the information 402 in FIG. 1 and FIG. 4-1, the information 403 in FIG. 5-1, and the information 404 in FIG. 6-1. The first device may display the first information by using a display, and play the first information by using a speaker, a headset, or the like, but this is not limited thereto.

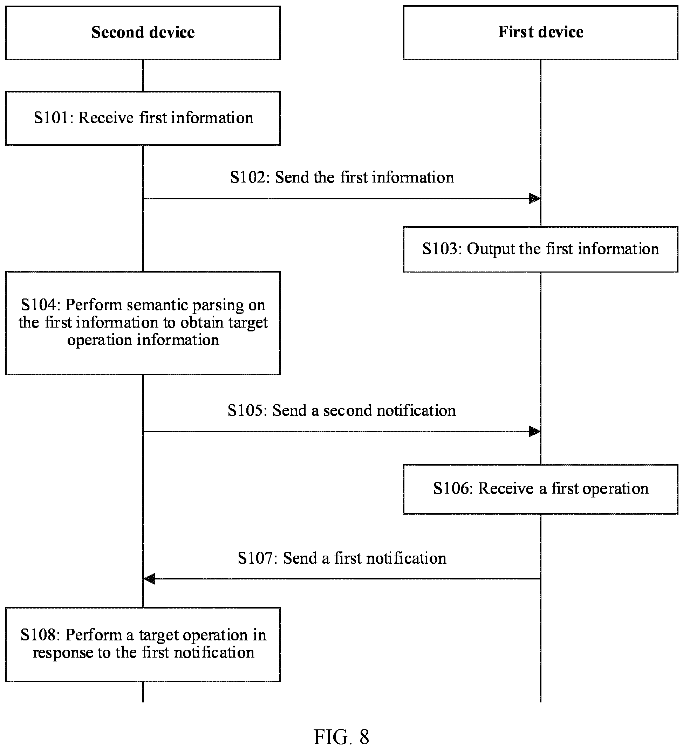

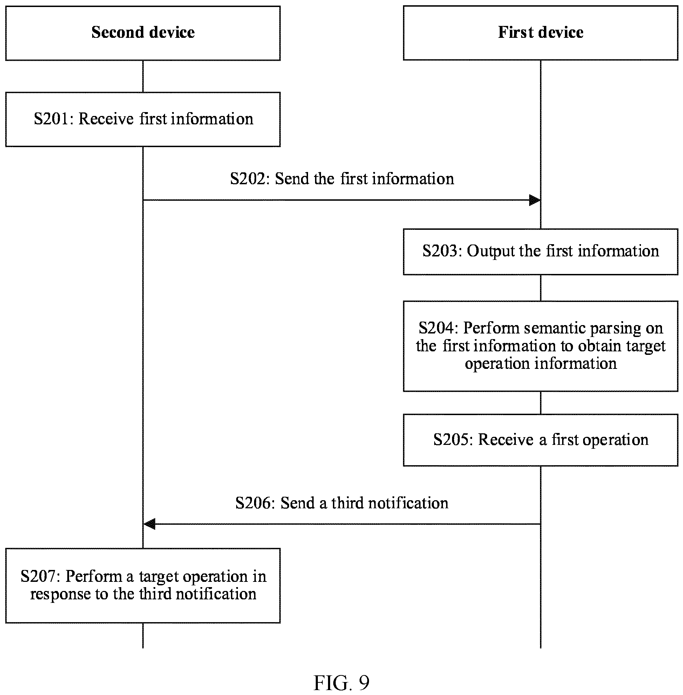

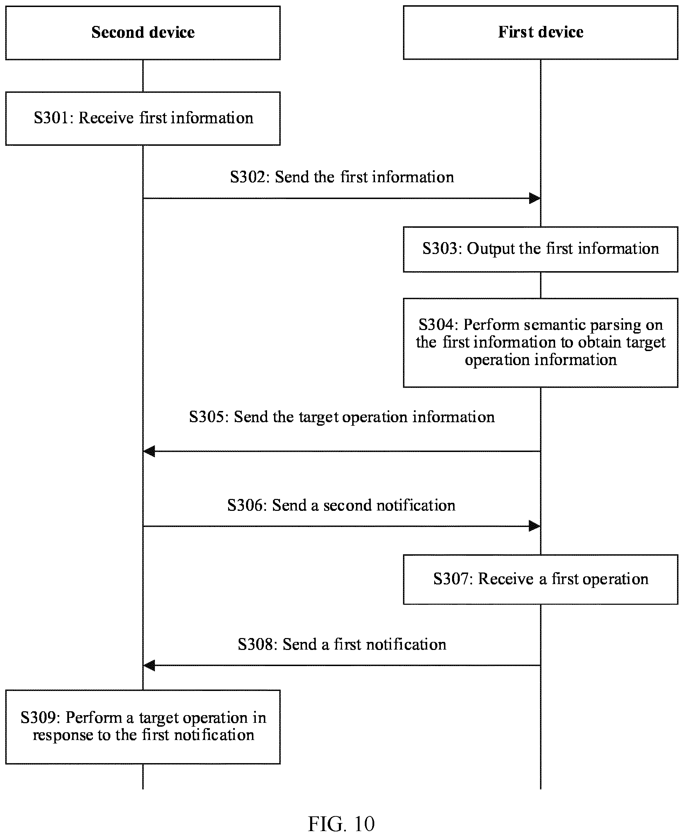

The first device or the second device may perform semantic parsing on the first information, to identify that the first information indicates to perform the target operation. The target operation is, for example but is not limited to, starting a first application, displaying a first interface, and enabling or disabling a first function. For descriptions of performing semantic parsing on the first information by the second device, refer to an embodiment shown in FIG. 8. For descriptions of performing semantic parsing on the first information by the first device, refer to embodiments shown in FIG. 9 and FIG. 10. Details are not described temporarily.

S1004: The first device receives a first operation.

Specifically, the first operation is, for example but is not limited to, a touch operation (for example, a tap operation), a double-tap operation, a touch and hold operation, or a slide operation performed on the display or a button. For a specific example, refer to the double-tap operation shown in FIG. 4-1, the touch and hold operation shown in FIG. 5-1, or the tap operation performed on the specific control shown in FIG. 6-1.

S1005: The first device sends a first notification to the second device in response to the first operation.

In some embodiments, the first notification indicates that the first device receives the first operation. For details, refer to a first notification in FIG. 8 or FIG. 10. In some other embodiments, the first notification includes indication information of the target operation (which is briefly referred to as target operation information) (that is, a semantic parsing result). For details, refer to a third notification in FIG. 9.

S1006: The second device performs the target operation after receiving the first notification.

FIG. 8 is a schematic flowchart of an example of another information processing method. FIG. 8 is described by using an example in which a second device is configured to receive first information, perform semantic parsing on the first information, and perform a target operation. The method includes but is not limited to the following steps.

S101: The second device receives the first information.

S102: The second device sends the first information to a first device.

S103: The first device outputs the first information after receiving the first information.

Specifically, S101 to S103 are consistent with S1001 to S1003 shown in FIG. 7, and details are not described again.

S104: The second device performs semantic parsing on the first information to obtain target operation information.

Specifically, the second device may perform semantic parsing on the first information, to identify that the first information indicates to perform the target operation, and obtain the target operation information (which may also be referred to as a semantic parsing result) represented by the first information. The target operation information may include at least one of the following: an identifier of an application that needs to be started, an identifier of a user interface that needs to be displayed, a parameter that needs to be entered, a function identifier, and the like.

For example, the first information includes a file. In this case, the target operation information obtained through semantic parsing may include an identifier of an application used to view the file (for example, an identifier of a reading application). Alternatively, the first information includes positioning information. In this case, the target operation information obtained through semantic parsing may include an identifier of a navigation application, an identifier of an interface used to enter a destination in the navigation application, and a destination name that needs to be entered (that is, a location represented by the positioning information). For other examples, refer to the semantic parsing results shown in FIG. 4-1 to FIG. 6-2.

It should be noted that a sequence of performing S102 and S103, and S104 is not limited.

S105: The second device sends a second notification to the first device.

Specifically, the second notification may indicate the first device to send a notification to the second device when the first device receives a first operation. Optionally, if a capability of receiving the first operation by the first device is in a disabled state by default, the second notification may further indicate the first device to enable the capability of receiving the first operation. Optionally, the second notification may further indicate a specific type of the first operation. For example, the first information indicates the first device to enable a capability of receiving a double-tap operation. For an example of the second notification, refer to the first indication information shown in FIG. 4-1 and FIG. 4-2, and FIG. 5-1 and FIG. 5-2.

S106: The first device receives the first operation.

S107: The first device sends a first notification to the second device.

Specifically, in response to the second notification, when receiving the first operation, the first device sends the first notification to the second device. The first notification indicates that the first device has received the first operation. For an example of the first notification, refer to the second indication information shown in FIG. 4-1 and FIG. 4-2, and FIG. 5-1 and FIG. 5-2.

S108: The second device performs the target operation in response to the first notification.

In some embodiments, before S105, the method may further include: The second device determines, based on the semantic parsing result, whether the second device can perform the target operation. For example, the second device determines whether the application that needs to be started is installed. The second device determines whether a list of executable functions includes a function corresponding to the function identifier. When determining that the second device can perform the target operation, the second device performs S105.

In some embodiments, it is assumed that the second device can perform the target operation only when user identity authentication succeeds. For example, the second device is in a screen-locked state before S108. Therefore, the second device may first obtain biometric feature information of a user, for example, obtain screen touch behavior information of the user by using a pressure sensor and/or a touch sensor, obtain facial information of the user by using a camera, obtain pulse information of the user by using a pulse sensor, and obtain heart rate information of the user by using a heart rate sensor, but this is not limited thereto. Then, the second device performs user identity authentication based on the obtained biometric feature information. When the user identity authentication succeeds, the second device may perform S108; otherwise, the second device may not perform the target operation or may perform the target operation until the user identity authentication succeeds.

FIG. 9 is a schematic flowchart of an example of another information processing method. FIG. 9 is described by using an example in which a first device is configured to perform semantic parsing on first information and a second device is configured to receive the first information and perform a target operation. The method includes but is not limited to the following steps.

S201: The second device receives the first information.

S202: The second device sends the first information to the first device.

S203: The first device outputs the first information after receiving the first information.

Specifically, S201 to S203 are consistent with S1001 to S1003 in FIG. 7, and details are not described again.

S204: The first device performs semantic parsing on the first information to obtain target operation information.

Specifically, S204 is similar to S104 in FIG. 8. However, S104 in FIG. 8 is performed by the second device, but S204 in FIG. 9 is performed by the first device. For details, refer to the descriptions of S104 in FIG. 8.

It should be noted that a sequence of performing S203 and S204 is not limited.

S205: The first device receives a first operation.

S206: The first device sends a third notification to the second device.

Specifically, when receiving the first operation, the first device may send the third notification to the second device. The third notification may include a semantic parsing result (that is, the target operation information), and the third notification may further indicate the second device to perform the target operation. For an example of the third notification, refer to the third indication information shown in FIG. 4-1 and FIG. 4-2.

In some embodiments, if a capability of receiving the first operation by the first device is in a disabled state, after S204, the first device may first enable the capability of receiving the first operation, to subsequently receive the first operation.

S207: The second device performs the target operation in response to the third notification.

In some embodiments, before S207, the method may further include: The second device determines, based on the semantic parsing result in the third notification, whether the second device can perform the target operation.

In some embodiments, if the first device obtains a list of applications installed on the second device, a list of executable functions, and the like, after S204, the method may further include: The first device determines, based on the semantic parsing result, whether the second device can perform the target operation. When determining that the second device can perform the target operation, the first device performs S205 and S206.

In some embodiments, it is assumed that the second device can perform the target operation only when user identity authentication succeeds. For example, the second device is in a screen-locked state before S207. Therefore, the second device may first obtain biometric feature information of a user, and then perform user identity authentication based on the obtained biometric feature information. When the user identity authentication succeeds, the second device may perform S207; otherwise, the second device may not perform the target operation or may perform the target operation until the user identity authentication succeeds.

FIG. 10 is a schematic flowchart of an example of another information processing method. FIG. 10 is described by using an example in which a first device is configured to perform semantic parsing on first information and a second device is configured to receive the first information and perform a target operation. The method includes but is not limited to the following steps.

S301: The second device receives the first information.

S302: The second device sends the first information to the first device.

S303: The first device outputs the first information after receiving the first information.

S304: The first device performs semantic parsing on the first information to obtain target operation information.

Specifically, S301 to S304 are consistent with S201 to S204 in FIG. 9, and details are not described again.

It should be noted that a sequence of performing S303 and S304 is not limited.

S305: The first device sends the target operation information (that is, a semantic parsing result) to the second device.

S306: The second device sends a second notification to the first device.

Specifically, S306 is consistent with S105 in FIG. 8, and details are not described again.

In some embodiments, after receiving the target operation information, the second device may determine, based on the semantic parsing result, whether the second device can perform the target operation. When determining that the second device can perform the target operation, the second device may send the second notification to the first device (that is, perform S306).

S307: The first device receives a first operation.

S308: The first device sends a first notification to the second device.

S309: The second device performs the target operation in response to the first notification.

Specifically, S307 to S309 are consistent with S106 to S108 in FIG. 8, and details are not described again.

In some embodiments, if the first device obtains a list of applications installed on the second device, a list of executable functions, and the like, before S305, the method may further include: The first device determines, based on the semantic parsing result, whether the second device can perform the target operation. When determining that the second device can perform the target operation, the first device performs S305.

In some embodiments, it is assumed that the second device can perform the target operation only when user identity authentication succeeds. For example, the second device is in a screen-locked state before S309. Therefore, the second device may first obtain biometric feature information of a user, and then perform user identity authentication based on the obtained biometric feature information. When the user identity authentication succeeds, the second device may perform S309; otherwise, the second device may not perform the target operation or may perform the target operation until the user identity authentication succeeds.

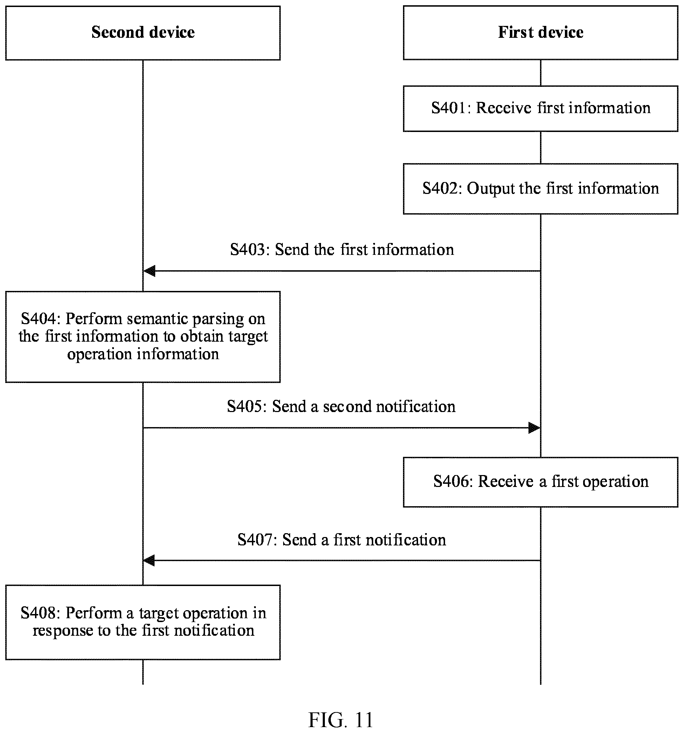

In some embodiments, the first information may alternatively be received by the first device. For example, the first device is a wearable device connected to a SIM card. For details, refer to FIG. 11 to FIG. 13.

FIG. 11 is a schematic flowchart of an example of another information processing method. FIG. 11 is described by using an example in which a first device is configured to receive first information and a second device is configured to perform semantic parsing on the first information and perform a target operation. The method includes but is not limited to the following steps.

S401: The first device receives the first information.

S402: The first device outputs the first information.

S403: The first device sends the first information to the second device.

Specifically, the first device may receive the first information from the internet or another device, and output the first information. In addition, the first device may send the first information to the second device for semantic parsing. For descriptions of the first information and the output of the first information, refer to the descriptions of S1001 to S1003 shown in FIG. 7. Details are not described again.

It should be noted that a sequence of performing S402 and S403 is not limited.

S404: The second device performs semantic parsing on the first information to obtain target operation information.

Specifically, S404 is consistent with S104 in FIG. 8, and details are not described again.

S405: The second device sends a second notification to the first device.

S406: The first device receives a first operation.

S407: The first device sends a first notification to the second device.

S408: The second device performs the target operation in response to the first notification.

Specifically, S405 to S408 are consistent with S105 to S108 in FIG. 8, and details are not described again.

In some embodiments, before S405, the method may further include: The second device determines, based on a semantic parsing result, whether the second device can perform the target operation. When determining that the second device can perform the target operation, the second device performs S405.

In some embodiments, it is assumed that the second device can perform the target operation only when user identity authentication succeeds. For example, the second device is in a screen-locked state before S408. Therefore, the second device may first obtain biometric feature information of a user, and then perform user identity authentication based on the obtained biometric feature information. When the user identity authentication succeeds, the second device may perform S408; otherwise, the second device may not perform the target operation or may perform the target operation until the user identity authentication succeeds.

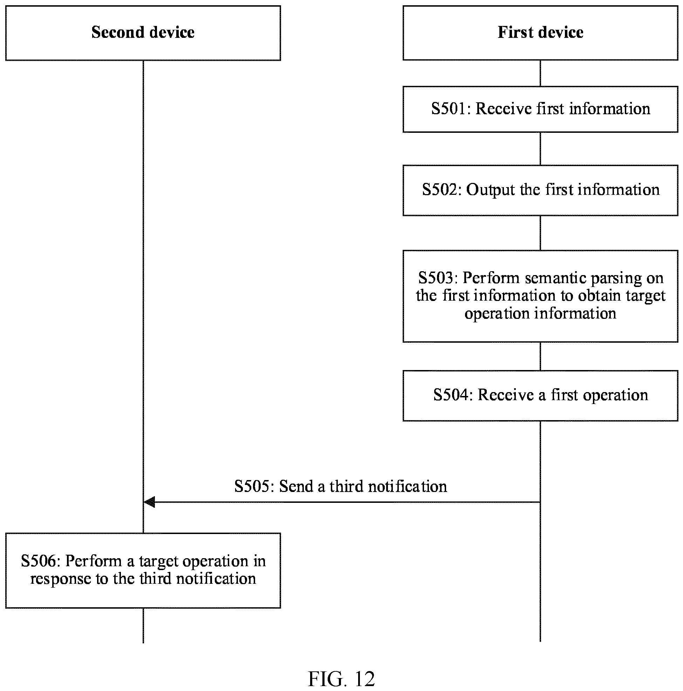

FIG. 12 is a schematic flowchart of an example of another information processing method. FIG. 12 is described by using an example in which a first device is configured to receive first information and perform semantic parsing on the first information and a second device is configured to perform a target operation. The method includes but is not limited to the following steps.

S501: The first device receives the first information.

S502: The first device outputs the first information.

Specifically, S501 and S502 are consistent with S401 and S402 in FIG. 11, and details are not described again.

S503: The first device performs semantic parsing on the first information to obtain target operation information.

Specifically, S503 is similar to S104 in FIG. 8. However, S104 in FIG. 8 is performed by the second device, but S503 in FIG. 12 is performed by the first device. For details, refer to the descriptions of S104 in FIG. 8.

It should be noted that a sequence of performing S502 and S503 is not limited.

S504: The first device receives a first operation.

S505: The first device sends a third notification to the second device.

S506: The second device performs the target operation in response to the third notification.

Specifically, S504 to S506 are consistent with S205 to S207 in FIG. 9, and details are not described again.

In some embodiments, if a capability of receiving the first operation by the first device is in a disabled state, after S503, the first device may first enable the capability of receiving the first operation, to subsequently receive the first operation.

In some embodiments, before S506, the method may further include: The second device determines, based on a semantic parsing result in the third notification, whether the second device can perform the target operation. When determining that the second device can perform the target operation, the second device performs S506.

In some embodiments, if the first device obtains a list of applications installed on the second device, a list of executable functions, and the like, after S503, the method further includes: The first device determines, based on the semantic parsing result, whether the second device can perform the target operation. When determining that the second device can perform the target operation, the first device performs S504 and S505.

In some embodiments, it is assumed that the second device can perform the target operation only when user identity authentication succeeds. For example, the second device is in a screen-locked state before S506. Therefore, the second device may first obtain biometric feature information of a user, and then perform user identity authentication based on the obtained biometric feature information. When the user identity authentication succeeds, the second device may perform S506; otherwise, the second device may not perform the target operation or may perform the target operation until the user identity authentication succeeds.

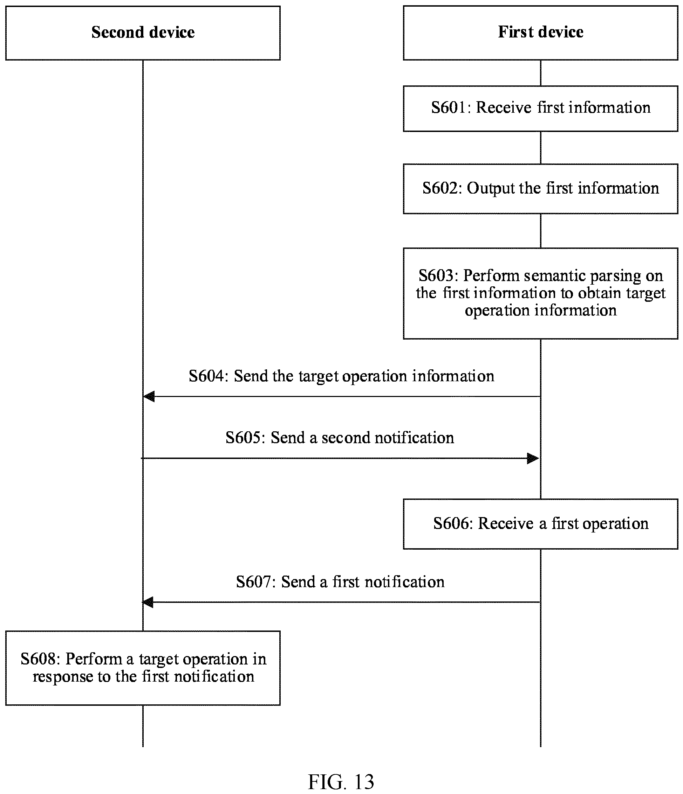

FIG. 13 is a schematic flowchart of an example of another information processing method. FIG. 13 is described by using an example in which a first device is configured to receive first information and perform semantic parsing on the first information and a second device is configured to perform a target operation. The method includes but is not limited to the following steps.

S601: The first device receives the first information.

S602: The first device outputs the first information.

Specifically, S601 and S602 are consistent with S401 and S402 in FIG. 11, and details are not described again.

S603: The first device performs semantic parsing on the first information to obtain target operation information.

Specifically, S603 is similar to S104 in FIG. 8. However, S104 in FIG. 8 is performed by the second device, but S603 in FIG. 13 is performed by the first device. For details, refer to the descriptions of S104 in FIG. 8.

It should be noted that a sequence of performing S602 and S603 is not limited.

S604: The first device sends the target operation information (that is, a semantic parsing result) to the second device.

S605: The second device sends a second notification to the first device.

S606: The first device receives a first operation.

S607: The first device sends a first notification to the second device.

S608: The second device performs the target operation in response to the first notification.

Specifically, S605 to S608 are consistent with S105 to S108 in FIG. 8, and details are not described again.

In some embodiments, after receiving the target operation information, the second device may determine, based on the target operation information, whether the second device can perform the target operation. When determining that the second device can perform the target operation, the second device may send the first information to the first device (that is, perform S605).

In some embodiments, if the first device obtains a list of applications installed on the second device, a list of executable functions, and the like, before S604, the method further includes: The first device determines, based on the semantic parsing result, whether the second device can perform the target operation. When determining that the second device can perform the target operation, the first device performs S604.

In some embodiments, it is assumed that the second device can perform the target operation only when user identity authentication succeeds. For example, the second device is in a screen-locked state before S608. Therefore, the second device may first obtain biometric feature information of a user, and then perform user identity authentication based on the obtained biometric feature information. When the user identity authentication succeeds, the second device may perform S608; otherwise, the second device may not perform the target operation or may perform the target operation until the user identity authentication succeeds.

In some embodiments, the information processing methods shown in FIG. 7 to FIG. 13 may further include: The second device sends an execution status of the target operation to the first device. The first device may display the execution status of the target operation, so that the user can view the status. A specific example is shown in FIG. 5-1 and FIG. 5-2. In other words, the user may obtain the execution status of the target operation by using the first device without taking out the second device. This greatly facilitates use of the user.

In the methods shown in FIG. 7 to FIG. 13, after the first device receives the first operation, the second device may directly perform the target operation. In other words, after obtaining the first information, the user may directly view, by performing the first operation, an execution result of the target operation that the first information indicates to perform. The execution result is, for example, the user interface 600 shown in FIG. 4-2, the user interface 610 or the user interface 410 shown in FIG. 5-2, or the user interface 420 shown in FIG. 6-2. Therefore, the user does not need to manually perform the target operation. This implements an effect of "one-step direct", and improves operation convenience and user experience.

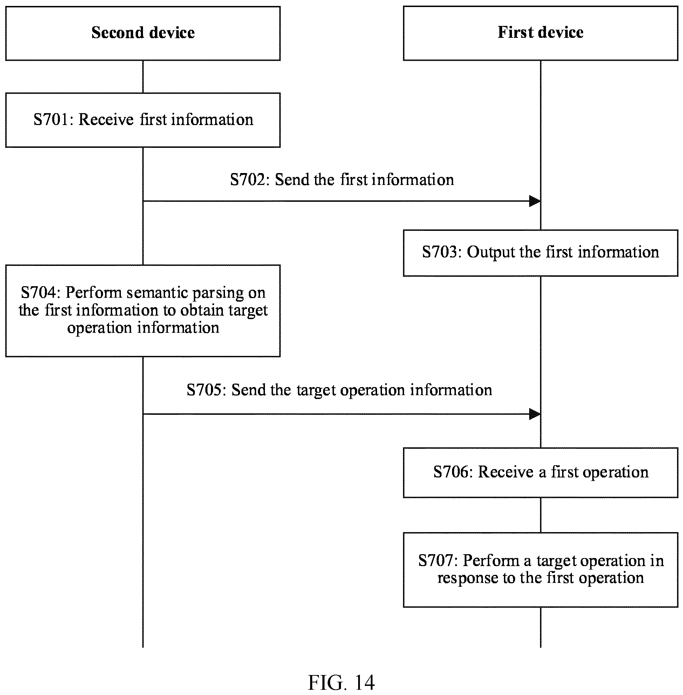

In some embodiments, the first device may alternatively perform the target operation. For details, refer to FIG. 14 to FIG. 16.

FIG. 14 is a schematic flowchart of an example of another information processing method. FIG. 14 is described by using an example in which a first device is configured to perform a target operation and a second device is configured to receive first information and perform semantic parsing on the first information. The method includes but is not limited to the following steps.

S701: The second device receives the first information.

S702: The second device sends the first information to the first device.

S703: The first device outputs the first information after receiving the first information.

S704: The second device performs semantic parsing on the first information to obtain target operation information.

Specifically, S701 to S704 are consistent with S101 to S104 in FIG. 8, and details are not described again. It should be noted that a sequence of performing S702 and S703, and S704 is not limited.

S705: The second device sends the target operation information to the first device.

S706: The first device receives a first operation.

S707: The first device performs the target operation in response to the first operation.

Specifically, when receiving the first operation, the first device may perform the target operation based on the target operation information sent by the second device.

In some embodiments, if a capability of receiving the first operation by the first device is in a disabled state, after receiving the target operation information, the first device may first enable the capability of receiving the first operation, to subsequently receive the first operation.

In some embodiments, before S707, the method may further include: The first device determines, based on the target operation information, whether the first device can perform the target operation. When determining that the first device can perform the target operation, the first device performs S707.

In some embodiments, if the second device obtains a list of applications installed on the first device, a list of executable functions, and the like, before S705, the method may further include: The second device determines, based on the target operation information, whether the first device can perform the target operation. When determining that the first device can perform the target operation, the second device performs S705.

In some embodiments, it is assumed that the first device can perform the target operation only when user identity authentication succeeds. For example, the first device is in a screen-locked state before S707. Therefore, the first device may first obtain biometric feature information of a user, and then perform user identity authentication based on the obtained biometric feature information. When the user identity authentication succeeds, the first device may perform S707; otherwise, the first device may not perform the target operation or may perform the target operation until the user identity authentication succeeds.

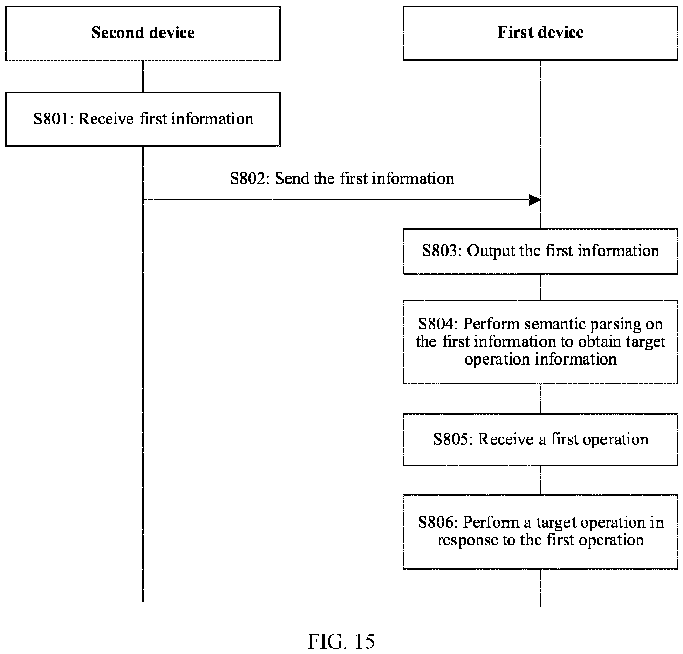

FIG. 15 is a schematic flowchart of an example of another information processing method. FIG. 15 is described by using an example in which a first device is configured to perform a target operation and perform semantic parsing on first information and a second device is configured to receive the first information. The method includes but is not limited to the following steps.

S801: The second device receives the first information.

S802: The second device sends the first information to the first device.

S803: The first device outputs the first information after receiving the first information.

Specifically, S801 to S803 are consistent with S101 to S103 in FIG. 8, and details are not described again.

S804: The first device performs semantic parsing on the first information to obtain target operation information.

Specifically, S804 is similar to S104 in FIG. 8. However, S104 in FIG. 8 is performed by the second device, but S804 in FIG. 15 is performed by the first device. For details, refer to the descriptions of S104 in FIG. 8.

It should be noted that a sequence of performing S803 and S804 is not limited.

S805: The first device receives a first operation.

S806: The first device performs the target operation in response to the first operation.

Specifically, when receiving the first operation, the first device may perform the target operation based on the obtained target operation information.

In some embodiments, if a capability of receiving the first operation by the first device is in a disabled state, after obtaining the target operation information, the first device may first enable the capability of receiving the first operation, to subsequently receive the first operation.

In some embodiments, before S806, the method may further include: The first device determines, based on the obtained target operation information, whether the first device can perform the target operation. When determining that the first device can perform the target operation, the first device performs S806.

In some embodiments, it is assumed that the first device can perform the target operation only when user identity authentication succeeds. For example, the first device is in a screen-locked state before S806. Therefore, the first device may first obtain biometric feature information of a user, and then perform user identity authentication based on the obtained biometric feature information. When the user identity authentication succeeds, the first device may perform S806; otherwise, the first device may not perform the target operation or may perform the target operation until the user identity authentication succeeds.

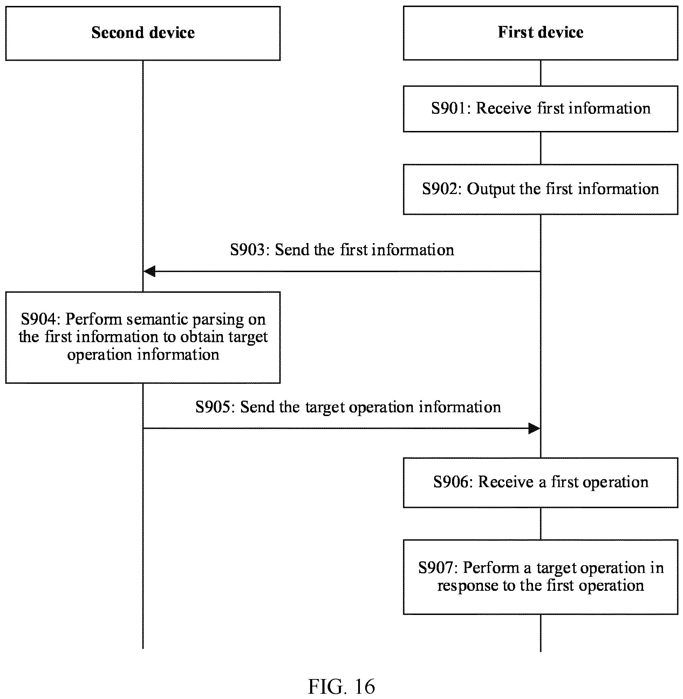

FIG. 16 is a schematic flowchart of an example of another information processing method. FIG. 16 is described by using an example in which a first device is configured to receive first information and perform a target operation and a second device is configured to perform semantic parsing on the first information. The method includes but is not limited to the following steps.

S901: The first device receives the first information.

S902: The first device outputs the first information.

S903: The first device sends the first information to the second device.

S904: The second device performs semantic parsing on the first information to obtain target operation information.

Specifically, S901 to S904 are consistent with S401 to S404 in FIG. 11, and details are not described again.

S905: The second device sends the target operation information to the first device.

S906: The first device receives a first operation.

S907: The first device performs the target operation in response to the first operation.

Specifically, when receiving the first operation, the first device may perform the target operation based on the target operation information sent by the second device.

In some embodiments, if a capability of receiving the first operation by the first device is in a disabled state, after receiving the target operation information, the first device may first enable the capability of receiving the first operation, to subsequently receive the first operation.

In some embodiments, before S907, the method may further include: The first device determines, based on the target operation information, whether the first device can perform the target operation. When determining that the first device can perform the target operation, the first device performs S907.

In some embodiments, if the second device obtains a list of applications installed on the first device, a list of executable functions, and the like, before S905, the method may further include: The second device determines, based on the target operation information, whether the first device can perform the target operation. When determining that the first device can perform the target operation, the second device performs S905.

In some embodiments, it is assumed that the first device can perform the target operation only when user identity authentication succeeds. For example, the first device is in a screen-locked state before S907. Therefore, the first device may first obtain biometric feature information of a user, and then perform user identity authentication based on the obtained biometric feature information. When the user identity authentication succeeds, the first device may perform S907; otherwise, the first device may not perform the target operation or may perform the target operation until the user identity authentication succeeds.

In the methods shown in FIG. 14 to FIG. 16, after the first device receives the first operation, the first device may directly perform the target operation. In other words, after obtaining the first information, the user may directly view, by using the first device, an execution result of the target operation that the first information indicates to perform. The execution result is, for example, the user interface 600 shown in FIG. 4-2, the user interface 610 or the user interface 410 shown in FIG. 5-2, or the user interface 420 shown in FIG. 6-2. This reduces steps of manually operating the first device by the user, implements an effect of "one-step direct", and improves operation convenience and user experience.

In this application, the first information may be further used to identify a device configured to perform the target operation, that is, the semantic parsing result (that is, the target operation information) includes information about the device configured to perform the target operation, for example, a device name. Therefore, after obtaining the semantic parsing result, the first device and the second device may determine, based on the semantic parsing result, the device configured to perform the target operation. For example, if the first information is a text: "You may open a shopping application on a mobile phone to see whether there is suitable clothes", the target operation information may include a name of a device (that is, the mobile phone) configured to perform the target operation, an identifier of the shopping application that needs to be started, an identifier of a search page that is of the shopping application and that needs to be displayed, and a parameter (that is, the clothes) that needs to be entered. Assuming that the first device is a smart band, and the second device is a smartphone, the first device and the second device may determine, based on the semantic parsing result, that the device configured to perform the target operation is the second device.

In some embodiments, the first device and the second device may alternatively preset the device configured to perform the target operation. For example, if the first device has a relatively weak processing capability, the first device and the second device preset the device configured to perform the target operation as the second device. Alternatively, the first device and the second device may determine, in response to a user-defined operation, the device configured to perform the target operation. For example, the user may set a device that conveniently implements information content as the second device on a page such as a setting interface of the first device or the second device, or a user interface of an installed "Health" application. In this case, the second device is configured to perform the target operation by default. A specific implementation is shown in FIG. 7 to FIG. 13.

This is not limited thereto. The first device and the second device may alternatively preset a priority of the device configured to perform the target operation, or determine, in response to a user-defined operation, a priority of the device configured to perform the target operation. For example, if it is determined that a priority of the first device is higher than that of the second device in devices configured to perform the target operation, after the semantic parsing result is obtained, it may be first determined whether the first device can perform the target operation. When the first device can perform the target operation, a specific implementation is shown in FIG. 14 to FIG. 16. When the first device cannot perform the target operation, it is determined whether the second device can perform the target operation. When the second device can perform the target operation, a specific implementation is shown in FIG. 7 to FIG. 13.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium, a semiconductor medium (for example, a solid-state drive), or the like. In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention. It is clearly that a person skilled in the art can make various modifications and variations to the present invention without departing from the spirit and scope of the present invention. The present invention is also intended to cover these modifications and variations provided that they fall within the scope of protection defined by the following claims and their equivalent technologies.

## Claims

1. An information processing method, wherein the method is applied to a system comprising a first device and a second device, and the first device is connected to the second device; and the method comprises:
receiving, by the second device, first information, and sending the first information to the first device, wherein the first information indicates to perform a target operation;
outputting, by the first device, the first information after receiving the first information;
receiving, by the first device, a first operation;
sending, by the first device, a first notification to the second device in response to the first operation; and
performing, by the second device, the target operation after receiving the first notification.

2. The method according to claim 1, wherein the method further comprises: after receiving the first information, identifying, by the second device, that the first information indicates to perform the target operation;
before the receiving, by the first device, a first operation, the method further comprises: sending, by the second device, a second notification to the first device; and
the sending, by the first device, a first notification to the second device in response to the first operation comprises: sending, by the first device, the first notification to the second device in response to the received first operation after receiving the second notification.

3. The method according to claim 1, wherein before the receiving, by the first device, a first operation, the method further comprises:
after receiving the first information, identifying, by the first device, that the first information indicates to perform the target operation;
sending, by the first device, a third notification to the second device, wherein the third notification comprises indication information of the target operation; and
sending, by the second device, a fourth notification to the first device after receiving the third notification; and
the sending, by the first device, a first notification to the second device in response to the first operation comprises: sending, by the first device, the first notification to the second device in response to the received first operation after receiving the fourth notification.

4. The method according to claim 1, wherein before the receiving, by the first device, a first operation, the method further comprises:
after receiving the first information, identifying, by the first device, that the first information indicates to perform the target operation, wherein
the first notification comprises indication information of the target operation.

5. The method according to claim 2 or 3, wherein the second notification or the fourth notification indicates the first device to enable a function of receiving the first operation.

6. The method according to claim 3, wherein the sending, by the first device, a third notification to the second device comprises:
sending, by the first device, the third notification to the second device when determining that the second device is able to perform the target operation.

7. The method according to claim 3, wherein the sending, by the second device, a fourth notification to the first device after receiving the third notification comprises:
after receiving the third notification, determining, by the second device, whether the second device is able to perform the target operation; and
sending, by the second device, the fourth notification to the first device when determining that the second device is able to perform the target operation.

8. The method according to claim 1, wherein the performing, by the second device, the target operation after receiving the first notification comprises:
performing, by the second device, user identity authentication after receiving the first notification; and
performing, by the second device, the target operation when the user identity authentication succeeds.

9. The method according to claim 1, wherein the first device is a wearable electronic device, and the second device is a mobile terminal device.

10. The method according to claim 1, wherein the target operation comprises at least one of the following: starting a first application, displaying a first interface, or enabling or disabling a first function.

11. The method according to claim 1, wherein the first information is instant messaging information or an SMS message.

12. An information processing system, wherein the system comprises a first device and a second device, and the first device is connected to the second device, wherein
the second device is configured to: receive first information, and send the first information to the first device, wherein the first information indicates to perform a target operation;
the first device is configured to: output the first information after receiving the first information; receive a first operation; and send a first notification to the second device in response to the first operation; and
the second device is configured to perform the target operation after receiving the first notification.

13. The system according to claim 12, wherein the second device is further configured to: after receiving the first information, identify that the first information indicates to perform the target operation;
before the first device receives the first operation, the second device is further configured to send a second notification to the first device; and
when the first device sends the first notification to the second device in response to the first operation, the first device is specifically configured to send the first notification to the second device in response to the received first operation after receiving the second notification.

14. The system according to claim 12, wherein before the first device receives the first operation, the first device is further configured to: after receiving the first information, identify that the first information indicates to perform the target operation; and send a third notification to the second device, wherein the third notification comprises indication information of the target operation; and the second device is further configured to send a fourth notification to the first device after receiving the third notification; and
when the first device sends the first notification to the second device in response to the first operation, the first device is specifically configured to send the first notification to the second device in response to the received first operation after receiving the fourth notification.

15. The system according to claim 12, wherein before the first device receives the first operation, the first device is further configured to: after receiving the first information, identify that the first information indicates to perform the target operation, wherein the first notification comprises indication information of the target operation.

16. The system according to claim 14, wherein when the first device sends the third notification to the second device, the first device is specifically configured to send the third notification to the second device when determining that the second device is able to perform the target operation.

17. The system according to claim 14, wherein when the second device sends the fourth notification to the first device after receiving the third notification, the second device is specifically configured to: after receiving the third notification, determine whether the second device is able to perform the target operation; and send the fourth notification to the first device when determining that the second device is able to perform the target operation.

18. The system according to claim 12, wherein when the second device performs the target operation after receiving the first notification, the second device is specifically configured to: perform user identity authentication after receiving the first notification; and perform the target operation when the user identity authentication succeeds.

19. A computer program product, wherein when the computer program product runs on an electronic device, the electronic device is enabled to perform the method according to any one of claims 1 to 11.

20. A computer storage medium, comprising computer instructions, wherein when the computer instructions are run on an electronic device, the electronic device is enabled to perform the method according to any one of claims 1 to 11.
